(19) Europäisches Patentamt / European Patent Office / Office européen des brevets

(11) **EP 4 007 229 A1**

(12) **EUROPEAN PATENT APPLICATION**
published in accordance with Art. 153(4) EPC

(43) Date of publication:
**01.06.2022 Bulletin 2022/22**

(21) Application number: **20942343.3**

(22) Date of filing: **09.11.2020**

(51) International Patent Classification (IPC):
*H04L 29/06* *(2006.01)*

(86) International application number:
**PCT/CN2020/127448**

(87) International publication number:
**WO 2021/258608 (30.12.2021 Gazette 2021/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.06.2020 CN 202010588541**

(71) Applicant: **Beijing Dajia Internet Information
Technology Co., Ltd.
Beijing 100085 (CN)**

(72) Inventor: **ZHOU, Chao
Beijing 100085 (CN)**

(74) Representative: **Yang, Shu
Withers & Rogers LLP
2 London Bridge
London SE1 9RA (GB)**

(54) **BANDWIDTH DETERMINATION METHOD AND APPARATUS, AND TERMINAL, AND STORAGE MEDIUM**

(57) The present disclosure relates to a method and an apparatus for determining a bandwidth, a terminal, and a storage medium, and belongs to the field of multimedia technologies. A third bandwidth of a group of pictures is determined based on a first bandwidth that is not less than a second bandwidth of the group of pictures in at least two first bandwidths of the group of pictures; and a target bandwidth is determined based on third bandwidths of at least two groups of pictures, such that the determined target bandwidth can be closer to a actual bandwidth of a terminal.

```
Acquiring, by the terminal, at least two first bandwidths of any group of pictures,
wherein the first bandwidth is an average download rate acquired every target time
interval in response to the group of pictures being downloaded            ⌐ S201

Determining, by the terminal, a third bandwidth of the group of pictures based on
at least one first bandwidth that is not less than a second bandwidth of the group of
pictures in the at least two first bandwidths, wherein the second bandwidth is an
average download rate acquired in response to the group of pictures being
downloaded                                                                 ⌐ S202

Determining a target bandwidth of a terminal based on third bandwidths of at least
two groups of pictures by the terminal                                     ⌐ S203
```

**FIG. 2**

**Description**

**CROSS-REFERENCE TO RELATED APPLICATION**

The present disclosure claims priority to Chinese Patent Application No. 202010588541.6, filed on June 24, 2020, and entitled "METHOD AND APPARATUS FOR DETERMINING BANDWIDTH, TERMINAL, AND STORAGE MEDIUM", the disclosure of which is herein incorporated by reference in its entirety.

**TECHNICAL FIELD**

The present disclosure relates to the field of multimedia technologies, and in particular, relates to a method and an apparatus for determining a bandwidth, a terminal, and a storage medium.

**BACKGROUND**

In the process of streaming media transmission, the multi-bit-rate adaptive strategy is a common strategy for improving the user's viewing experience. This multi-bitrate adaptive strategy refers to selecting the best video bitrate and resolution for playing by estimating a bandwidth at a client-side and combining the characteristics of a terminal and a player, thereby dynamically compromising the conflicts between the playing lag and the definition. Therefore, how to accurately estimate the bandwidth of the terminal is a challenging problem.

At present, a common method for estimating the bandwidth includes: counting the total volume of data received by the terminal in a period of time, and then taking a ratio of the total volume of data to the period of time as the bandwidth of the terminal.

**SUMMARY**

The present disclosure provides a method and an apparatus for determining a bandwidth, a terminal, and a storage medium. The technical solutions of the present disclosure are as follows.

According to an aspect of the embodiments of the present disclosure, a method for determining a bandwidth is provided. The method includes:

> acquiring at least two first bandwidths of any group of pictures, wherein the first bandwidth is an average download rate acquired every target time interval in response to the group of pictures being downloaded;
> determining a third bandwidth of the group of pictures based on at least one first bandwidth that is not less than a second bandwidth of the group of pictures in the at least two first bandwidths, wherein the second bandwidth is an average download rate acquired in response to the group of pictures being downloaded; and
> determining a target bandwidth of a terminal based on third bandwidths of at least two groups of pictures.

According to a second aspect of the embodiments of the present disclosure, an apparatus for determining a bandwidth is provided. The apparatus includes:

> an acquiring unit, configured to acquire at least two first bandwidths of any group of pictures, wherein the first bandwidth is an average download rate acquired every target time interval in response to the group of pictures being downloaded;
> a first determining unit, configured to determine a third bandwidth of the group of pictures based on at least one first bandwidth that is not less than a second bandwidth of the group of pictures in the at least two first bandwidths, wherein the second bandwidth is an average download rate acquired in response to the group of pictures being downloaded; and
> a second determining unit, configured to determine a target bandwidth of a terminal based on third bandwidths of at least two groups of pictures.

In some embodiments, the first determining unit is configured to acquire at least one first bandwidth not less than the second bandwidth from the at least two first bandwidths; and acquire an average value of the at least one first bandwidth, and determine the average value as the third bandwidth of the group of pictures.

In some embodiments, the second determining unit is configured to determine a weighted average value of the third bandwidths of the at least two groups of pictures, and determine the weighted average value as the target bandwidth of the terminal.

In some embodiments, the apparatus further includes:

a third determining unit, configured to determine, during reception of a video stream from a server, at least two first bandwidths corresponding to the group of pictures and a second bandwidth corresponding to the group of pictures in response to one group of pictures being received, wherein the video stream includes a plurality of groups of pictures.

In some embodiments, the apparatus further includes:

a bitrate selecting unit, configured to select a target video bitrate matching with the target bandwidth from a plurality of video bitrates based on the target bandwidth; and
a request sending unit, configured to send a video acquisition request carrying the target video bitrate to the server.

According to another aspect of the embodiments of the present disclosure, a terminal is provided. The terminal includes:

one or more processors; and
a memory configured to store at least one instruction executable by the one or more processors;
wherein the one or more processors are configured to execute the at least one instruction to perform:
acquiring at least two first bandwidths of any group of pictures, wherein the first bandwidth is an average download rate acquired every target time interval in response to the group of pictures being downloaded;
determining a third bandwidth of the group of pictures based on at least one first bandwidth that is not less than a second bandwidth of the group of pictures in the at least two first bandwidths, wherein the second bandwidth is an average download rate acquired in response to the group of pictures being downloaded; and
determining a target bandwidth of a terminal based on third bandwidths of at least two groups of pictures.

In some embodiments, the one or more processors are configured to execute the at least one instruction to perform:

acquiring at least one first bandwidth not less than the second bandwidth from the at least two first bandwidths; and
acquiring an average value of the at least one first bandwidth, and determining the average value as the third bandwidth of the group of pictures.

In some embodiments, the one or more processors are configured to execute the at least one instruction to perform:
determining a weighted average value of the third bandwidths of the at least two groups of pictures, and determining the weighted average value as the target bandwidth of the terminal.

In some embodiments, the one or more processors are configured to execute the at least one instruction to perform:
determining, during reception of a video stream from a server, at least two first bandwidths corresponding to the group of pictures and a second bandwidth corresponding to the group of pictures in response to one group of pictures being received, wherein the video stream includes a plurality of groups of pictures.

In some embodiments, the one or more processors are configured to execute the at least one instruction to perform:

selecting a target video bitrate matching with the target bandwidth from a plurality of video bitrates based on the target bandwidth; and
sending a video acquisition request carrying the target video bitrate to the server.

According to another aspect of the embodiments of the present disclosure, a storage medium storing at least one instruction is provided. The at least one instruction, when executed by a processor of a terminal, enables the terminal to perform:

acquiring at least two first bandwidths of any group of pictures, wherein the first bandwidth is an average download rate acquired every target time interval in response to the group of pictures being downloaded;
determining a third bandwidth of the group of pictures based on at least one first bandwidth that is not less than a second bandwidth of the group of pictures in the at least two first bandwidths, wherein the second bandwidth is an average download rate acquired in response to the group of pictures being downloaded; and
determining a target bandwidth of a terminal based on third bandwidths of at least two groups of pictures.

In some embodiments, the one or more processors are configured to execute the at least one instruction to perform:

acquiring at least one first bandwidth not less than the second bandwidth from the at least two first bandwidths; and acquiring an average value of the at least one first bandwidth, and determining the average value as the third bandwidth of the group of pictures.

In some embodiments, the one or more processors are configured to execute the at least one instruction to perform:

determining a weighted average value of the third bandwidths of the at least two groups of pictures, and determining the weighted average value as the target bandwidth of the terminal.

In some embodiments, the one or more processors are configured to execute the at least one instruction to perform:

determining, during reception of a video stream from a server, at least two first bandwidths corresponding to the group of pictures and a second bandwidth corresponding to the group of pictures in response to one group of pictures being received, wherein the video stream includes a plurality of groups of pictures.

In some embodiments, the one or more processors are configured to execute the at least one instruction to perform:

selecting a target video bitrate matching with the target bandwidth from a plurality of video bitrates based on the target bandwidth; and
sending a video acquisition request carrying the target video bitrate to the server.

According to another aspect of the embodiments of the present disclosure, an application program product is provided. The application program product stores one or more instructions, which is executed by a processor of a terminal to perform:

acquiring at least two first bandwidths of any group of pictures, wherein the first bandwidth is an average download rate acquired every target time interval in response to the group of pictures being downloaded;
determining a third bandwidth of the group of pictures based on at least one first bandwidth that is not less than a second bandwidth of the group of pictures in the at least two first bandwidths, wherein the second bandwidth is an average download rate acquired in response to the group of pictures being downloaded; and
determining a target bandwidth of a terminal based on third bandwidths of at least two groups of pictures.

In some embodiments, the one or more processors are configured to execute the at least one instruction to perform:

acquiring at least one first bandwidth not less than the second bandwidth from the at least two first bandwidths; and
acquiring an average value of the at least one first bandwidth, and determining the average value as the third bandwidth of the group of pictures.

In some embodiments, the one or more processors are configured to execute the at least one instruction to perform:

determining a weighted average value of the third bandwidths of the at least two groups of pictures, and determining the weighted average value as the target bandwidth of the terminal.

In some embodiments, the one or more processors are configured to execute the at least one instruction to perform:

determining, during reception of a video stream from a server, at least two first bandwidths corresponding to the group of pictures and a second bandwidth corresponding to the group of pictures in response to one group of pictures being received, wherein the video stream includes a plurality of groups of pictures.

In some embodiments, the one or more processors are configured to execute the at least one instruction to perform:

selecting a target video bitrate matching with the target bandwidth from a plurality of video bitrates based on the target bandwidth; and
sending a video acquisition request carrying the target video bitrate to the server.

It should be understood that the above general descriptions and the following detailed descriptions are only exemplary and illustrative, and not intended to limit the present disclosure.

**BRIEF DESCRIPTION OF THE DRAWINGS**

The accompanying drawings, which are incorporated into and constitute a part of this specification, illustrate embodiments of the present disclosure and together with the present disclosure, serve to explain the principles of the present disclosure, but do constitute any improper limitation on the present disclosure.

FIG. 1 is a schematic diagram of an implementation environment of a method for determining a bandwidth according to an exemplary embodiment;
FIG. 2 is a flowchart of a method for determining a bandwidth according to an exemplary embodiment;
FIG. 3 is a flowchart of another method for determining a bandwidth according to an exemplary embodiment;
FIG. 4 is a block diagram of an apparatus for determining a bandwidth according to an exemplary embodiment; and
FIG. 5 is a structural block diagram of a terminal according to an exemplary embodiment.

## DETAILED DESCRIPTION

To make those of ordinary skills in the art better understand the technical solutions of the present disclosure, the following clearly and completely describes the technical solutions in embodiments of the present disclosure with reference to the accompanying drawings.

It should be noted that the terms "first," "second," and the like in the specification and claims of the present disclosure and the accompanying drawings are configured to distinguish between similar objects but do not necessarily indicate a specific order or sequence. It should be understood that the data used in such a way may be exchanged under proper conditions to make it possible to implement the described embodiments of the present disclosure in sequences except those illustrated or described herein. The details described in the following exemplary embodiments do not represent all embodiments consistent with the present disclosure. On the contrary, these embodiments are only embodiments of a device and a method detailed in the appended claims and consistent with some aspects of the present disclosure.

User information involved in the present disclosure may be information authorized by users or fully authorized by various parties.

The terms that may be involved in the embodiments of the present disclosure will be explained below.

Group of pictures (GOP): a GOP is a group of consecutive pictures. Moving picture experts group (MPEG): a picture (i.e., a frame) is divided by coding into three types: I-frame, P-frame, and B-frame, wherein I-frame represents an intra-coded frame; P-frame represents a forward predictive frame; and B-frame represents a bidirectional interpolation frame. In short, the I-frame is an entire picture, and the P-frame and B-frame record changes relative to the I-frame. Without the I-frame, neither the P-frame nor the B-frame can be decoded. This is the reason why the MPEG format is difficult to accurately clip. In the case of an arrangement pattern of IBBPBBPBBPBBPBBP..., this combination of consecutive frames of pictures is the GOP.

An embodiment of the present disclosure provides a method for determining a bandwidth, which is applicable to a scenario where a user watches live streaming via a terminal. For example, the user may send a playing request to the server via the terminal, and the playing request may carry a video identifier and a video bitrate of a requested video. Generally, a video provided by the server will be transcoded into a variety of different video bitrates. In the case that the video bitrate requested by the terminal is high, and the terminal has a poor network condition or a small bandwidth, the video would be lagged in response to the terminal playing the video, leading to poor user experience. In the case that the video bitrate requested by the terminal is low, and the terminal has a good network condition and a large bandwidth, the resolution of the video would be low in response to the terminal playing the video, leading to poor user experience as well. According to the method for determining the bandwidth according to the embodiment of the present disclosure, a third bandwidth of a group of pictures can be determined based on a first bandwidth that is not less than a second bandwidth of the group of pictures in at least two first bandwidths of the group of pictures, such that the third bandwidth can well reflect a bandwidth at which the group of pictures is downloaded; and then, a target bandwidth can be determined based on third bandwidths of at least two groups of pictures, such that the determined target bandwidth can be closer to an actual bandwidth of a terminal. After the target bandwidth is determined, the terminal can request a video having a corresponding video bitrate based on the target bandwidth, such that the resolution of the video still is also high under the condition of ensuring no lag.

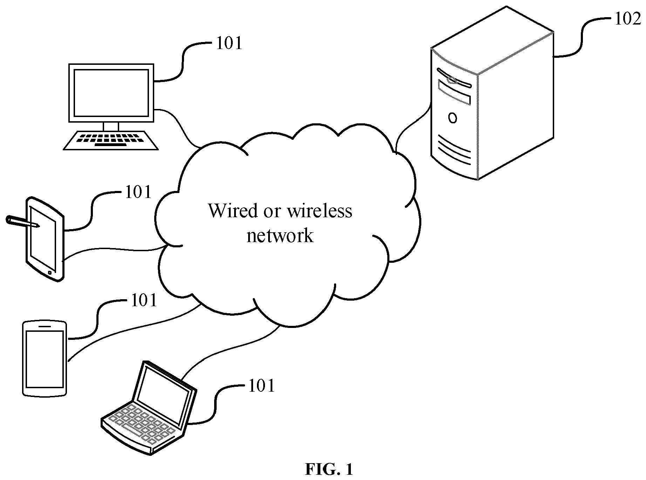

FIG. 1 is a schematic diagram of an implementation environment of a method for determining a bandwidth according to an exemplary embodiment. Referring to FIG. 1, the implementation environment includes: a terminal 101 and a server 102.

The terminal 101 may be at least one of devices such as a smartphone, a smartwatch, a desktop computer, a portable computer, a Moving Picture Experts Group Audio Layer III (MP3) player, a Moving Picture Experts Group Audio Layer IV (MP4) player, and a laptop portable computer. An application program that supports the playing of live streaming may be installed and run on the terminal 101, and a user may log in to the application program via the terminal 101 to acquire a service provided by the application program. The terminal 101 may be connected to the server 102 via a wireless or wired network, and then send a live-streaming acquisition request to the server 102 to acquire live-streaming data returned by the server 102.

The terminal 101 may refer to one of a plurality of terminals in a general sense, and this embodiment only takes the terminal 101 as an example for illustration. Those skilled in the art may know that the number of the above terminal may be more or less. For example, there may be only several, tens, or hundreds of, or more terminals above. The number and device type of the terminal are not limited in the embodiments of the present disclosure.

The server 102 may be at least one of a server, a plurality of servers, a cloud computing platform, and a virtualization center. The server 102 may be connected to the terminal 101 and other terminals via a wireless or wired network; and the server 102 may receive a playing request sent by the terminal 101, and return a video stream to the terminal 101 via a data center based on the playing request. The number of the above server may be more or less, which is not limited in the embodiments of the present disclosure. In addition, the server 102 may further include other functional servers to provide more comprehensive and diversified services.

There is a large gap between a bandwidth determined in the related art and an actual bandwidth of the terminal, resulting in a low accuracy rate for determining the bitrate adaptation based on the bandwidth determined in the method of the related art.

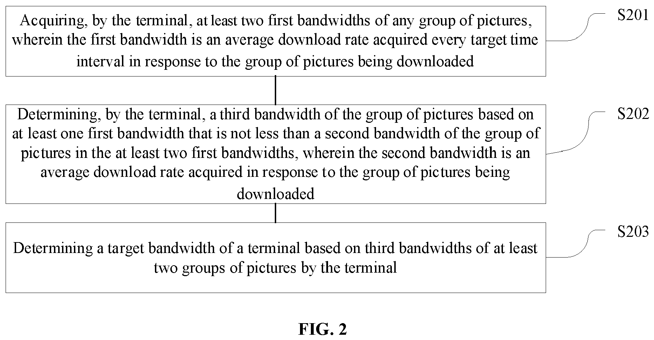

FIG. 2 is a flowchart of a method for determining a bandwidth according to an exemplary embodiment. Referring to FIG. 2, the method is executed by a terminal and specifically includes the following processes.

In S201, the terminal acquires at least two first bandwidths of any group of pictures, wherein the first bandwidth is an average download rate acquired every target time interval in response to the group of pictures being downloaded.

In the embodiment of the present disclosure, the video stream received by the terminal is composed of a plurality of groups of pictures. In response to receiving the video stream by the terminal, the average download rate for every target time interval is taken as the first bandwidth. At the same time, each time a group of pictures is acquired, the average download rate of the acquired group of pictures is taken as a second bandwidth. Since the time required for the terminal to download any group of pictures may be greater than at least two target time intervals, the terminal may determine, for any group of pictures, at least two first bandwidths corresponding to the group of pictures.

In S202, the terminal determines a third bandwidth of the group of pictures based on at least one first bandwidth that is not less than a second bandwidth of the group of pictures in the at least two first bandwidths, wherein the second bandwidth is an average download rate acquired in response to the group of pictures being downloaded.

In the embodiment of the present disclosure, the terminal may take the average download rate acquired in response to downloading each group of pictures, as the second bandwidth of the group of pictures. Due to the presence of network fluctuations, the first bandwidth may be greater than, or smaller than, or equal to the second bandwidth. The larger the first bandwidth, the closer to the actual bandwidth of the terminal. Therefore, a third bandwidth of the group of pictures may be preliminarily estimated based on the at least two first bandwidths and the second bandwidth of the group of pictures as defined above, and the third bandwidth is closer to the actual bandwidth of the terminal.

In S203, the terminal determines a target bandwidth of the terminal based on third bandwidths of at least two groups of pictures.

In the embodiment of the present disclosure, the at least two groups of pictures may be consecutive groups of pictures, or groups of pictures acquired at intervals, or randomly selected groups of pictures. The terminal may calculate the target bandwidth of the terminal by acquiring third bandwidths of at least two groups of pictures, such that the target bandwidth is a relatively stable bandwidth for a period of time. The target bandwidth is close to the actual bandwidth of the terminal and is relatively stable.

In the solution according to the embodiment of the present disclosure, a third bandwidth of a group of pictures is determined based on the first bandwidth that is not less than a second bandwidth of the group of pictures in the at least two first bandwidths of the group of pictures, such that the third bandwidth can well reflect a bandwidth at which the group of pictures is downloaded; and then, a target bandwidth can be determined based on third bandwidths of at least two groups of pictures, such that the determined target bandwidth can be closer to an actual bandwidth of a terminal.

In some embodiments, determining the third bandwidth of the group of pictures based on the at least two first bandwidths and the second bandwidth of the group of pictures includes:

acquiring at least one first bandwidth not less than the second bandwidth from the at least two first bandwidths; and acquiring an average value of the at least one first bandwidth, and determining the average value as the third bandwidth of the group of pictures.

Since the first bandwidths that are not less than the second bandwidth are selected first, and then an average value of the first bandwidths is calculated, the calculated third bandwidth may reflect the bandwidth that is relatively stable and has a higher value in response to the group of pictures being downloaded.

In some embodiments, determining the target bandwidth of the terminal based on the third bandwidths of the at least two groups of pictures includes:
determining a weighted average value of the third bandwidths of the at least two groups of pictures, and determining the weighted average value as the target bandwidth of the terminal.

Since the weighted average value of the third bandwidths of the at least two groups of pictures is taken as the target bandwidth of the terminal, the target bandwidth may reflect the bandwidth that is relatively stable in a period of time and has a high value, for the terminal.

In some embodiments, prior to acquiring the at least two first bandwidths of any group of pictures, the method further includes:

determining, during reception of a video stream from a server, at least two first bandwidths corresponding to the group of pictures and a second bandwidth corresponding to the group of pictures in response to one group of pictures being received, wherein the video stream includes a plurality of groups of pictures.

Since the first bandwidth and the second bandwidth are determined in the case that the video stream is acquired, the terminal may acquire the first and second bandwidths of any group of pictures based on the established association relationship.

In some embodiments, upon determining the target bandwidth of the terminal based on the third bandwidths of the at least two groups of pictures, the method further includes:

selecting a target video bitrate matching with the target bandwidth from a plurality of video bitrates based on the target bandwidth; and
sending a video acquisition request carrying the target video bitrate to the server.

Since the target video bitrate matching with the target bandwidth is selected based on the target bandwidth, the video bitrate of the video stream requested by the terminal is closer to the actual bandwidth of the terminal, thereby avoiding bandwidth waste.

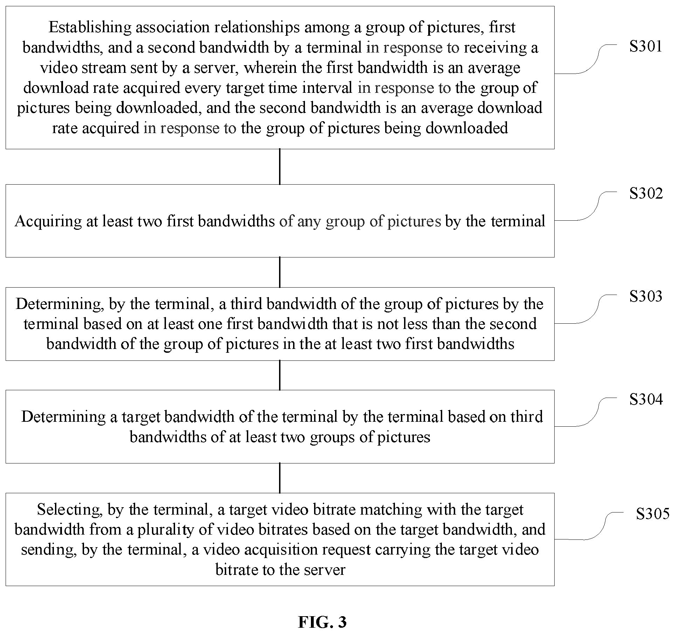

The above FIG. 2 only illustrates the basic process of the present disclosure. The solution according to the present disclosure will be further set forth based on a specific embodiment below. FIG. 3 is a flowchart of another method for determining a bandwidth according to an exemplary embodiment. Referring to FIG. 3, the method includes the following processes.

In S301, a terminal establishes association relationships among a group of pictures, first bandwidths, and a second bandwidth in response to receiving a video stream sent by a server, wherein the first bandwidth is an average download rate acquired every target time interval in response to the group of pictures being downloaded, and the second bandwidth is an average download rate acquired in response to the group of pictures being downloaded.

In the embodiment of the present disclosure, the terminal may receive the video stream sent by the server, and the video stream includes at least two groups of pictures. Each time one group of pictures is received, the terminal may acquire the average download rate in response to downloading the group of pictures, and takes the average download rate as the second bandwidth of the group of pictures. The terminal may also acquire a first bandwidth every target time interval in response to receiving the video stream, wherein the first bandwidth is a ratio of the volume of data downloaded at the target time interval to the target time interval, that is, one single average download rate within the target time interval. The target time interval is smaller than the time required to download one group of pictures, and a corresponding terminal may acquire at least two first bandwidths each time one group of pictures is received. That is, one group of pictures corresponds to at least two first bandwidths and one second bandwidth. For each group of pictures, the terminal may establish an association relationship among the group of pictures, at least two first bandwidths of the group of pictures, and a second bandwidth of the group of pictures. The first bandwidth may also be referred to as bandwidth information on time granularity, and the second bandwidth may also be referred to as bandwidth information on GOP granularity. Since the first bandwidth and the second bandwidth are determined in the case that the video stream is acquired, the terminal may acquire the first and second bandwidths of any group of pictures based on the established association relationship.

It should be noted that, for each GOP, $bw^{gop}$ may be used to represent the bandwidth information on GOP granularity. $bw_i^{gop}$ may represent a second bandwidth of an $i^{th}$ GOP among the second bandwidths of at least two GOPs acquired by the terminal.

In S302, the terminal acquires at least two first bandwidths of any group of pictures.

In the embodiment of the present disclosure, the target time interval is generally smaller than the time required to download one group of pictures. Therefore, the terminal may acquire at least two first bandwidths in response to downloading one group of pictures. The target time interval may be 200 milliseconds, 500 milliseconds, 1000 milliseconds, or the like, which is not limited in the embodiment of the present disclosure. The time required to download one group of pictures may be 1 second, 2 seconds, 3 seconds, or the like, which is not limited in the embodiment of the present disclosure. The terminal may acquire at least two first bandwidths of the group of pictures based on the association relationship between the group of pictures and the first bandwidths.

It should be noted that continuing to take the above $i^{th}$ GOP as an example, it is assumed that the terminal acquires N first bandwidths in response to acquiring the $i$th GOP, wherein N is a positive integer greater than or equal to 2. Then, the N first bandwidths may be denoted as $\left[bw_0^i, bw_1^i, \ldots, bw_{N-1}^i\right]$.

In S303, the terminal determines a third bandwidth of the group of pictures based on at least one first bandwidth that is not less than the second bandwidth of the group of pictures in the at least two first bandwidths.

In the embodiment of the present disclosure, the download rate of the terminal in response to downloading the group of pictures is unstable due to the presence of network fluctuations, therefore, the first bandwidth acquired by the terminal may be greater than, or smaller than, or equal to the second bandwidth. For any group of pictures, the terminal may acquire at least one first bandwidth that is not less than the second bandwidth from the at least two first bandwidths. Then, the terminal may acquire an average value of the at least one first bandwidth and take the average value as the third bandwidth of the group of pictures. Since the first bandwidths that are not less than the second bandwidth are selected first, and then an average value of the first bandwidths is calculated, the calculated third bandwidth may reflect the bandwidth that is relatively stable and has a higher value in response to the group of pictures being downloaded.

It should be noted that the above third bandwidth may be calculated by the following formula (1):

$$bw_i^{est} = \frac{\sum bw_n^i * 1\left(bw_n^i \geqslant bw_i^{gop}\right)}{\sum 1\left(bw_n^i \geqslant bw_i^{gop}\right)} \qquad (1);$$

wherein $bw_i^{est}$ represents a third bandwidth of the $i$th group of pictures; $bw_n^i$ represents an $n$th first bandwidth among N first bandwidths; $bw_i^{gop}$ represents a second bandwidth of an $i$th group of pictures; and 1( ) represents that 1 is taken when a statement within the brackets is true, otherwise 0 is taken.

It should be noted that in the case that the first bandwidth is smaller than the second bandwidth, that is, $\sum 1\left(bw_n^i \geqslant bw_i^{gop}\right) = 0$ in formula 1, the terminal may directly take the second bandwidth of the group of pictures as the third bandwidth of the group of pictures, that is, $bw_i^{est} = bw_i^{gop}$.

In S304, the terminal determines a target bandwidth of the terminal based on third bandwidths of at least two groups of pictures.

In the embodiment of the present disclosure, the terminal may take the third bandwidth of the above group of pictures as the target bandwidth of the terminal, and may also determine the target bandwidth of the terminal based on the third bandwidths of at least two groups of pictures.

In some embodiments, the terminal may select M consecutive groups of pictures by sliding a window, acquire a bandwidth weight corresponding to each of the M consecutive groups of pictures, and then determine a weighted average value of third bandwidths of the M consecutive groups of pictures, taking the weighted average value as the target bandwidth of the terminal. M is a positive integer greater than or equal to 2. The target bandwidth of the terminal is determined based on the M consecutive groups of pictures and may be updated in real time based on a third bandwidth of a new group of pictures, such that the target bandwidth is smoother and may reflect the actual bandwidth of the terminal.

In some embodiments, the terminal may randomly select M groups of pictures from a plurality of groups of pictures acquired in a preset period of time every a preset time interval, acquire a bandwidth weight corresponding to each of the M groups of pictures, and then determine a weighted average value of third bandwidths of the M groups of pictures, taking the weighted average value as the target bandwidth of the terminal. Then, the average value of the target bandwidth is updated in the next preset period of time. The preset period of time may be 30 seconds, 1 minute, 2 minutes, or the like, which is not limited in the embodiment of the present disclosure. The target bandwidth is determined based on the third bandwidths of the groups of pictures within a preset time period. The target bandwidth may be determined once every a preset period of time to reduce the load of calculation and save the computing resources of the terminal.

It should be noted that the third bandwidths of the M groups of pictures acquired by the terminal may be expressed as $\left[bw_k^{est}, b_{k+1}^{est}, \ldots, bw_{k+M-1}^{est}\right]$. The terminal may determine the target bandwidth of the terminal via the following formula (2):

$$BW_{k+M-1} = \frac{\sum bw_i^{est} * w_i}{M}, \quad k \leqslant i \leqslant k + M - 1$$

$$(2);$$

wherein $BW_{k+M-1}^{est}$ represents the target bandwidth, and $w_i$ represents a bandwidth weight of an $i^{th}$ group of pictures.

In S305, the terminal selects a target video bitrate matching with the target bandwidth from a plurality of video bitrates based on the target bandwidth and sends a video acquisition request carrying the target video bitrate to the server.

In the embodiment of the present disclosure, after acquiring the above target bandwidth, the terminal may select the target video bitrate matching with the target bandwidth from the plurality of bitrates corresponding to a currently viewed video based on a matching relationship between the bandwidth and the video bitrate. Then, a video acquisition request carrying the target video bitrate is sent to the server to acquire a video stream at the target video bitrate.

In the embodiment of the present disclosure, a third bandwidth of a group of pictures is determined based on a first bandwidth that is not less than a second bandwidth of the group of pictures in at least two first bandwidths of the group of pictures, such that the third bandwidth can well reflect a bandwidth at which the group of pictures is downloaded; and then, a target bandwidth can be determined based on third bandwidths of at least two groups of pictures, such that the determined target bandwidth can be closer to a actual bandwidth of a terminal.

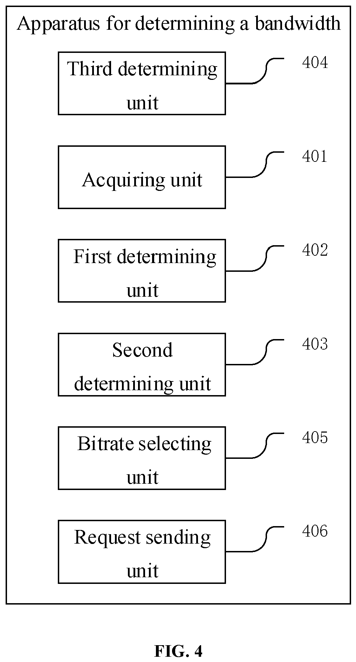

FIG. 4 is a block diagram of an apparatus for determining a bandwidth according to an exemplary embodiment. Referring to FIG. 4, the apparatus includes an acquiring unit 401, a first determining unit 402, and a second determining unit 403.

The acquiring unit 401 is configured to acquire at least two first bandwidths of any group of pictures, wherein the first bandwidth is an average download rate acquired every target time interval in response to the group of pictures being downloaded.

The first determining unit 402 is configured to determine a third bandwidth of the group of pictures based on at least one first bandwidth that is not less than a second bandwidth of the group of pictures in the at least two first bandwidths, wherein the second bandwidth is an average download rate acquired in response to the group of pictures being downloaded.

The second determining unit 403 is configured to determine a target bandwidth of a terminal based on third bandwidths of at least two groups of pictures.

In the embodiment of the present disclosure, a third bandwidth of a group of pictures is determined based on a first bandwidth that is not less than a second bandwidth of the group of pictures in at least two first bandwidths of the group of pictures, such that the third bandwidth can well reflect a bandwidth at which the group of pictures is downloaded; and then, a target bandwidth can be determined based on third bandwidths of at least two groups of pictures, such that the determined target bandwidth may be closer to an actual bandwidth of a terminal.

In some embodiments, the first determining unit 402 is configured to acquire at least one first bandwidth not less than the second bandwidth from the at least two first bandwidths; and acquiring an average value of the at least one first bandwidth, and determine the average value as the third bandwidth of the group of pictures.

In some embodiments, the second determining unit 403 is configured to determine a weighted average value of the third bandwidths of the at least two groups of pictures, and determine the weighted average value as the target bandwidth of the terminal.

In some embodiments, the apparatus further includes:

a third determining unit 404 configured to determine, during reception of a video stream from a server, at least two first bandwidths corresponding to the group of pictures and a second bandwidth corresponding to the group of pictures in response to one group of pictures being received, wherein the video stream includes a plurality of groups of pictures.

In some embodiments, the apparatus further includes:

a bitrate selecting unit 405 configured to select a target video bitrate matching with the target bandwidth from a plurality of video bitrates based on the target bandwidth; and
a request sending unit 406 configured to send a video acquisition request carrying the target video bitrate to the server.

It should be noted that the apparatus for determining the bandwidth provided by the above embodiments only takes the division of all the functional units as an example for explanation during the determining of the bandwidth. In practice, the above functions may be finished by the different functional units as required. That is, the internal structure of the terminal is divided into different functional units to finish all or part of the functions described above. In addition, the apparatus for determining the bandwidth provided by the above embodiments is derived from the same concept as the method for determining the bandwidth provided by the above embodiments. Reference may be made to the method embodiment for the specific implementation process, which is not repeated here.

For the apparatus in the embodiments above, the specific manner in which each module performs the operations has been described in detail in the embodiments of the related method, and will not be described in detail here.

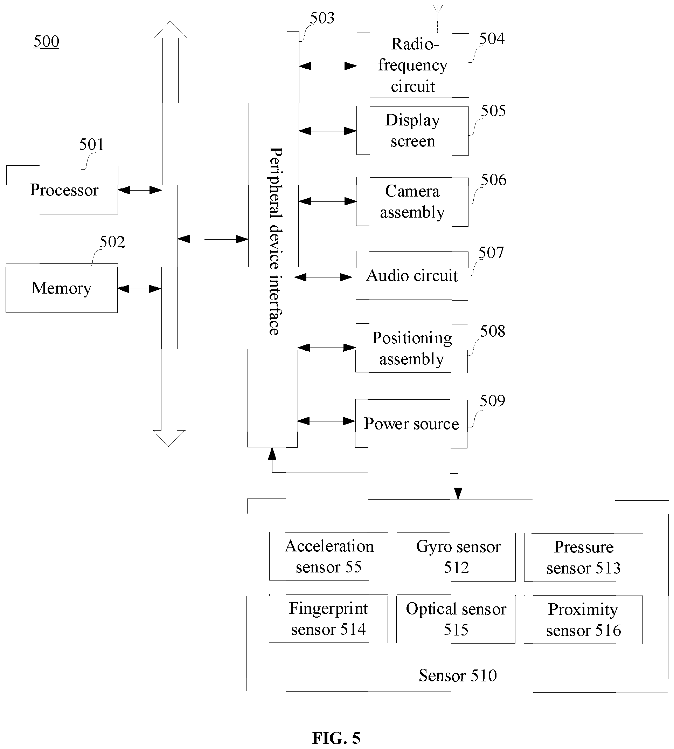

FIG. 5 is a structural block diagram of a terminal 500 according to an exemplary embodiment. The terminal 500 may be a smartphone, a tablet computer, a moving picture experts group audio layer III (MP3) player, a moving picture experts group audio layer IV (MP4) player, a notebook computer, or a desktop computer. The terminal 500 may also be called user equipment, a portable terminal, a laptop terminal, a desktop terminal, or the like.

Usually, the terminal 500 includes a processor 501 and a memory 502.

The processor 501 may include one or more processing cores, such as 4-core processors or 8-core processors. The processor 501 may be implemented by at least one of the hardware forms of a digital signal processor (DSP), a field-programmable gate array (FPGA), and a programmable logic array (PLA). The processor 501 may further include a main processor and a co-processor. The main processor is configured to process data in an awake state and is also called a central processing unit (CPU); and the co-processor is a low-power-consumption processor configured to process data in a standby state. In some embodiments, the processor 501 may be integrated with a graphic processing unit (GPU), which is configured to render and draw the content that needs to be displayed on a display screen. In some embodiments, the processor 501 may further include an artificial intelligence (AI) processor configured to process computational operations related to machine learning.

The memory 502 may include one or more computer-readable storage media, which may be non-transitory. The memory 502 may further include a high-speed random-access memory, and a non-volatile memory, such as one or more magnetic disk storage devices and flash storage devices. In some embodiments, the non-transitory computer-readable storage medium in the memory 502 is configured to store at least one instruction executed by the processor 501 for performing:

> acquiring at least two first bandwidths of any group of pictures, wherein the first bandwidth is an average download rate acquired every target time interval in response to the group of pictures being downloaded;
> determining a third bandwidth of the group of pictures based on at least one first bandwidth that is not less than a second bandwidth of the group of pictures in the at least two first bandwidths, wherein the second bandwidth is an average download rate acquired in response to the group of pictures being downloaded; and
> determining a target bandwidth of a terminal based on third bandwidths of at least two groups of pictures.

In some embodiments, the processor is configured to execute the at least one instruction to perform:

> acquiring at least one first bandwidth not less than the second bandwidth from the at least two first bandwidths; and
> acquiring an average value of the at least one first bandwidth, and determining the average value as the third bandwidth of the group of pictures.

In some embodiments, the processor is configured to execute the at least one instruction to perform: determining a weighted average value of the third bandwidths of the at least two groups of pictures, and determining the weighted average value as the target bandwidth of the terminal.

In some embodiments, the processor is configured to execute the at least one instruction to perform: determining, during reception of a video stream from a server, at least two first bandwidths corresponding to the group of pictures and a second bandwidth corresponding to the group of pictures in response to one group of pictures being received, wherein the video stream includes a plurality of groups of pictures.

In some embodiments, the processor is configured to execute the at least one instruction to perform:

> selecting a target video bitrate matching with the target bandwidth from a plurality of video bitrates based on the target bandwidth; and
> sending a video acquisition request carrying the target video bitrate to the server.

In some embodiments, the terminal 500 may further optionally include a peripheral device interface 503 and at least one peripheral device. The processor 501, the memory 502, and the peripheral device interface 503 may be connected to each other by buses or signal lines. Each peripheral device may be connected to the peripheral device interface 503 via a bus, a signal line, or a circuit board. In some embodiments, the peripheral device includes at least one of a radio-frequency circuit 504, a display screen 505, a camera assembly 506, an audio circuit 507, a positioning assembly 508, and a power source 509.

The peripheral device interface 503 may be configured to connect at least one peripheral device associated with an input/output (I/O) to the processor 501 and the memory 502. In some embodiments, the processor 501, the memory 502 and the peripheral device interface 503 are integrated on the same chip or circuit board. In some other embodiments, any one or two of the processor 501, the memory 502 and the peripheral device interface 503 may be implemented on a separate chip or circuit board, which is not limited in the present disclosure.

The radio-frequency circuit 504 is configured to receive and transmit a radio frequency (RF) signal, which is also referred to as an electromagnetic signal. The radio-frequency circuit 504 is communicated with a communication network and other communication devices via the electromagnetic signal. The radio-frequency circuit 504 converts an electrical signal into the electromagnetic signal for transmission or converts the received electromagnetic signals into the electrical signal. For example, the radio-frequency circuit 504 includes an antenna system, an RF transceiver, one or more amplifiers, a tuner, an oscillator, a digital signal processor, a codec chipset, a user identity module card, or the like. The radio-frequency circuit 504 may be communicated with other terminals through at least one wireless communication protocol. The wireless communication protocol includes but is not limited to, a metropolitan area network, various generations of mobile communication networks (2G, 3G, 4G, and 5G), a wireless local area network, and/or a wireless fidelity (Wi-Fi)) network. In some embodiments, the radio-frequency circuit 504 may further include a circuit related to the near-field communication (NFC), which is not limited in the present disclosure.

The display screen 505 is configured to display a user interface (UI). The UI may include graphics, text, icons, videos, and any combination thereof. In the case that the display screen 505 is a touch display screen, the display screen 505 is further capable of acquiring a touch signal on or over a surface of the display screen 505. The touch signal may be input into the processor 501 as a control signal for processing. In this case, the display screen 505 may be further configured to provide virtual buttons and/or a virtual keyboard, which is/are also referred to as soft buttons and/or a soft keyboard. In some embodiments, one display screen 505 may be disposed on a front panel of the terminal 500. In some other embodiments, at least two display screens 505 may be disposed on different surfaces of the terminal 500 or in a folded design. In still other embodiments, the display screen 505 may be a flexible display screen disposed on a bending or folded surface of the terminal 500. Moreover, the display screen 505 may have an irregular shape other than rectangle, that is, an irregularly-shaped screen. The display screen 505 may be made from materials such as a liquid crystal display (LCD) and an organic light-emitting diode (OLED).

The camera assembly 506 is configured to capture images or videos. For example, the camera assembly 506 includes a front camera and a rear camera. Usually, the front camera is disposed on a front panel of the terminal, and the rear camera is disposed on the back of the terminal. In some embodiments, at least two rear cameras are disposed, each of which is at least one of a main camera, a depth-of-field camera, a wide-angle camera, and a telephoto camera, to realize a background blurring function achieved by fusion of the main camera and the depth-of-field camera, panoramic shooting and virtual reality (VR) shooting functions achieved by fusion of the main camera and the wide-angle camera, or other fusion shooting functions. In some embodiments, the camera assembly 506 may further include a flashlight. The flashlight may be a monochromatic-temperature flashlight or a dichromatic-temperature flashlight. The dichromatic-temperature flashlight refers to a combination of a warm-light flashlight and a cold-light flashlight and may serve to compensate light at different chromatic temperatures.

The audio circuit 507 may include a microphone and a loudspeaker. The microphone is configured to capture sound waves from users and environments, and convert the sound waves into electrical signals, which are then input to the processor 501 to be processed, or input to the radio-frequency circuit 504 for voice communication. For stereo acquisition or noise reduction, there are a plurality of microphones disposed at different parts of the terminal 500. The microphone may also be an array microphone or an omnidirectional acquisition type microphone. The loudspeaker is configured to convert electrical signals from the processor 501 or the radio-frequency circuit 504 into sound waves. The loudspeaker may be a traditional thinfilm loudspeaker or a piezoelectric ceramic loudspeaker. In the case that loudspeaker is the piezoelectric ceramic loudspeaker, the electrical signals may be converted into sound waves not only human-audible sound waves, but also the sound waves which are inaudible to human beings for distance measurement and the like. In some embodiments, the audio circuit 507 may further include a headphone jack.

The positioning assembly 508 is configured to position a current geographic location of the terminal 500 to implement navigation or a location based service (LBS). The positioning assembly 508 may be the United States' Global Positioning System (GPS), Russia's Global Navigation Satellite System (GLONASS), China's BeiDou Navigation Satellite System (BDS), and the European Union's Galileo Satellite Navigation System (Galileo).

The power source 509 is configured to supply power for various components in the terminal 500. The power supply 509 may be an alternating current, a direct current, a disposable battery, or a rechargeable battery. In the case that the power supply 509 includes the rechargeable battery, the rechargeable battery may support wired charging or wireless charging. The rechargeable battery may be further configured to support the fast charging technology.

In some embodiments, the terminal 500 may further include one or more sensors 510. The one or more sensors 510 include, but are not limited to, an acceleration sensor 511, a gyro sensor 512, a pressure sensor 513, a fingerprint sensor 514, an optical sensor 515, and a proximity sensor 516.

The acceleration sensor 511 may detect magnitudes of accelerations on three coordinate axes of a coordinate system established based on the terminal 500. For example, the acceleration sensor 511 may be configured to detect components of a gravitational acceleration on three coordinate axes. The processor 501 may control the display screen 505 to display a user interface in a landscape view or a portrait view based on a gravity acceleration signal acquired by the acceleration sensor 511. The acceleration sensor 511 may be further configured to acquire motion data of a game or a user.

The gyro sensor 512 may detect a body direction and a rotation angle of the terminal 500 and cooperate with the acceleration sensor 511 to acquire a 3D motion of the user on the terminal 500. Based on the data acquired by the gyro sensor 512, the processor 501 may achieve the following functions: motion sensing (for example, changing the UI according to a user's tilt operation), image stabilization during shooting, game control, and inertial navigation.

The pressure sensor 513 may be disposed on a side frame of the terminal 500 and/or at a lower layer of the display screen 505. In the case that the pressure sensor 513 is disposed on the side frame of the terminal 500, a user's holding signal to the terminal 500 may be detected, and the processor 501 performs left-right hand recognition or shortcut operation according to the holding signal acquired by the pressure sensor 513. In the case that the pressure sensor 513 is disposed on the lower layer of the display screen 505, the processor 501 controls an operable control on the UI according to a user's press operation on the display screen 505. The operable control includes at least one of a button control, a scroll bar control, an icon control, and a menu control.

The fingerprint sensor 514 is configured to acquire a user's fingerprint. The processor 501 recognizes the user's identity based on the fingerprint acquired by the fingerprint sensor 514, or the fingerprint sensor 514 recognizes the user's identity based on the acquired fingerprint. In the case that the user's identity is recognized as trusted, the processor 501 authorizes the user to perform related sensitive operations, which include unlocking the screen, viewing encrypted information, downloading software, paying, changing settings, and the like. The fingerprint sensor 514 may be disposed on the front, the back, or the side of the terminal 500. In the case that a physical button or a manufacturer's logo is disposed on the terminal 500, the fingerprint sensor 514 may be integrated with the physical button or the manufacturer's logo.

The optical sensor 515 is configured to acquire ambient light intensity. In one embodiment, the processor 501 may control the display brightness of the display screen 505 based on the ambient light intensity acquired by the optical sensor 515. In some embodiments, in the case that the intensity of ambient light is high, the display brightness of the display screen 505 is increased; and in the case that the intensity of ambient light is low, the display brightness of the display screen 505 is decreased. In another embodiment, the processor 501 may also dynamically adjust shooting parameters of the camera assembly 506 based on the ambient light intensity acquired by the optical sensor 515.

The proximity sensor 516, also referred to as a distance sensor, is usually disposed on the front panel of the terminal 500. The proximity sensor 516 is configured to acquire a distance between a user and a front surface of the terminal 500. In some embodiments, in response to the proximity sensor 516 detecting that the distance between the user and the front of the terminal 500 gradually decreases, the processor 501 controls the display screen 505 to switch from a screen-on state to a screen-off state; and in response to the proximity sensor 516 detecting the distance between the user and the front of the terminal 500 gradually increases, the processor 501 controls the display screen 505 to switch from the screen-off state to the screen-on state.

Those skilled in the art may understand that the terminal 500 is not limited by the structure illustrated in FIG. 5, and may include more or fewer assemblies than those illustrated, or a combination of assemblies, or assemblies arranged differently.

An exemplary embodiment of the present disclosure further provides a storage medium including at least one instruction, for example, a memory including at least one instruction. The at least one instruction may be executed by the processor to perform:

acquiring at least two first bandwidths of any group of pictures, wherein the first bandwidth is an average download rate acquired every target time interval in response to the group of pictures being downloaded;
determining a third bandwidth of the group of pictures based on at least one first bandwidth that is not less than a second bandwidth of the group of pictures in the at least two first bandwidths, wherein the second bandwidth is an average download rate acquired in response to the group of pictures being downloaded; and
determining a target bandwidth of a terminal based on third bandwidths of at least two groups of pictures.
In some embodiments, the processor is configured to execute the at least one instruction to perform:
acquiring at least one first bandwidth not less than the second bandwidth from the at least two first bandwidths; and
acquiring an average value of the at least one first bandwidth, and determining the average value as the third bandwidth of the group of pictures.
In some embodiments, the processor is configured to execute the at least one instruction to perform:
determining a weighted average value of the third bandwidths of the at least two groups of pictures, and determining the weighted average value as the target bandwidth of the terminal.

In some embodiments, the processor is configured to execute the at least one instruction to perform:
determining, during reception of a video stream from a server, at least two first bandwidths corresponding to the group of pictures and a second bandwidth corresponding to the group of pictures in response to one group of pictures being received, wherein the video stream includes a plurality of groups of pictures.

In some embodiments, the processor is configured to execute the at least one instruction to perform:

> selecting a target video bitrate matching with the target bandwidth from a plurality of video bitrates based on the target bandwidth; and
> sending a video acquisition request carrying the target video bitrate to the server.

In some embodiments, the storage medium may be a non-transitory computer-readable storage medium. For example, the computer-readable storage medium may be a read-only memory (ROM), a random-access memory (RAM), a compact disc read-only memory (CD-ROM), a magnetic tape, a floppy disk, an optical data storage device, or the like.

In an exemplary embodiment, an application program product is further provided. The application program product stores one or more instructions, which may be executed by a processor of a terminal to perform:

> acquiring at least two first bandwidths of any group of pictures, wherein the first bandwidth is an average download rate acquired every target time interval in response to the group of pictures being downloaded;
> determining a third bandwidth of the group of pictures based on at least one first bandwidth that is not less than a second bandwidth of the group of pictures in the at least two first bandwidths, wherein the second bandwidth is an average download rate acquired in response to the group of pictures being downloaded; and
> determining a target bandwidth of a terminal based on third bandwidths of at least two groups of pictures.

In some embodiments, the processor is configured to execute the at least one instruction to perform:

> acquiring at least one first bandwidth not less than the second bandwidth from the at least two first bandwidths; and
> acquiring an average value of the at least one first bandwidth, and determining the average value as the third bandwidth of the group of pictures.

In some embodiments, the processor is configured to execute the at least one instruction to perform: determining a weighted average value of the third bandwidths of the at least two groups of pictures, and determining the weighted average value as the target bandwidth of the terminal.

In some embodiments, the processor is configured to execute the at least one instruction to perform: determining, during reception of a video stream from a server, at least two first bandwidths corresponding to the group of pictures and a second bandwidth corresponding to the group of pictures in response to one group of pictures being received, wherein the video stream includes a plurality of groups of pictures.

In some embodiments, the processor is configured to execute the at least one instruction to perform:

> selecting a target video bitrate matching with the target bandwidth from a plurality of video bitrates based on the target bandwidth; and
> sending a video acquisition request carrying the target video bitrate to the server.

Other embodiments of the present disclosure will be apparent to those skilled in the art from consideration of the specification and practice of the present disclosure. The present disclosure is intended to cover any variations, uses, or adaptive changes of the present disclosure. These variations, uses, or adaptive changes follow the general principle of the present disclosure and include common knowledge or conventional technical means in the technical field, which are not disclosed in the present disclosure. The specification and embodiments are to be considered as exemplary only, and the true scope and spirit of the present disclosure are as indicated by the appended claims.

It will be understood that the present disclosure is not limited to the precise structures described above and illustrated in the accompanying drawings, and that various modifications and changes may be made without departing from the scope thereof. The scope of the present disclosure is limited only by the appended claims.

**Claims**

**1.** A method for determining a bandwidth, comprising:

> acquiring at least two first bandwidths of any group of pictures, wherein the first bandwidth is an average download rate acquired every target time interval in response to the group of pictures being downloaded;
> determining a third bandwidth of the group of pictures based on at least one first bandwidth that is not less than a second bandwidth of the group of pictures in the at least two first bandwidths, wherein the second bandwidth is an average download rate acquired in response to the group of pictures being downloaded; and
determining a target bandwidth of a terminal based on third bandwidths of at least two groups of pictures.

2. The method according to claim 1, wherein said determining the third bandwidth of the group of pictures based on at least one first bandwidth that is not less than a second bandwidth of the group of pictures in the at least two first bandwidths comprises:

acquiring at least one first bandwidth not less than the second bandwidth from the at least two first bandwidths; and
acquiring an average value of the at least one first bandwidth, and determining the average value as the third bandwidth of the group of pictures.

3. The method according to claim 1, wherein said determining the target bandwidth of the terminal based on the third bandwidths of the at least two groups of pictures comprises:
determining a weighted average value of the third bandwidths of the at least two groups of pictures, and determining the weighted average value as the target bandwidth of the terminal.

4. The method according to claim 1, wherein prior to said acquiring the at least two first bandwidths of any group of pictures, the method further comprises:
determining, during reception of a video stream from a server, at least two first bandwidths corresponding to the group of pictures and a second bandwidth corresponding to the group of pictures in response to one group of pictures being received, wherein the video stream comprises a plurality of groups of pictures.

5. The method according to claim 1, wherein upon said determining the target bandwidth of the terminal based on the third bandwidths of the at least two groups of pictures, the method further comprises:

selecting a target video bitrate matching with the target bandwidth from a plurality of video bitrates based on the target bandwidth; and
sending a video acquisition request carrying the target video bitrate to a server.

6. An apparatus for determining a bandwidth, comprising:

an acquiring unit, configured to acquire at least two first bandwidths of any group of pictures, wherein the first bandwidth is an average download rate acquired every target time interval in response to the group of pictures being downloaded;
a first determining unit, configured to determine a third bandwidth of the group of pictures based on at least one first bandwidth that is not less than a second bandwidth of the group of pictures in the at least two first bandwidths, wherein the second bandwidth is an average download rate acquired in response to the group of pictures being downloaded; and
a second determining unit, configured to determine a target bandwidth of a terminal based on third bandwidths of at least two groups of pictures.

7. The apparatus according to claim 6, wherein the first determining unit is configured to acquire at least one first bandwidth not less than the second bandwidth from the at least two first bandwidths; and acquire an average value of the at least one first bandwidth, and determine the average value as the third bandwidth of the group of pictures.

8. The apparatus according to claim 6, wherein the second determining unit is configured to determine a weighted average value of the third bandwidths of the at least two groups of pictures, and determine the weighted average value as the target bandwidth of the terminal.

9. The apparatus according to claim 6, further comprising:
a third determining unit, configured to determine, during reception of a video stream from a server, at least two first bandwidths corresponding to the group of pictures and a second bandwidth corresponding to the group of pictures in response to one group of pictures being received, wherein the video stream comprises a plurality of groups of pictures.

10. The apparatus according to claim 1, further comprising:

a bitrate selecting unit, configured to select a target video bitrate matching with the target bandwidth from a plurality of video bitrates based on the target bandwidth; and

a request sending unit, configured to send a video acquisition request carrying the target video bitrate to a server.

11. A terminal, comprising:

one or more processors; and
a memory configured to store at least one instruction executable by the one or more processors,
wherein the one or more processors are configured to execute the at least one instruction to perform:

acquiring at least two first bandwidths of any group of pictures, wherein the first bandwidth is an average download rate acquired every target time interval in response to the group of pictures being downloaded; determining a third bandwidth of the group of pictures based on at least one first bandwidth that is not less than a second bandwidth of the group of pictures in the at least two first bandwidths, wherein the second bandwidth is an average download rate acquired in response to the group of pictures being downloaded; and determining a target bandwidth of a terminal based on third bandwidths of at least two groups of pictures.

12. The terminal according to claim 11, wherein the one or more processors are configured to execute the at least one instruction to perform:

acquiring at least one first bandwidth not less than the second bandwidth from the at least two first bandwidths; and
acquiring an average value of the at least one first bandwidth, and determining the average value as the third bandwidth of the group of pictures.

13. The terminal according to claim 11, wherein the one or more processors are configured to execute the at least one instruction to perform:
determining a weighted average value of the third bandwidths of the at least two groups of pictures, and determining the weighted average value as the target bandwidth of the terminal.

14. The terminal according to claim 11, wherein the one or more processors are configured to execute the at least one instruction to perform:
determining, during reception of a video stream from a server, at least two first bandwidths corresponding to the group of pictures and a second bandwidth corresponding to the group of pictures in response to one group of pictures being received, wherein the video stream comprises a plurality of groups of pictures.

15. The terminal according to claim 11, wherein the one or more processors are configured to execute the at least one instruction to perform:

selecting a target video bitrate matching with the target bandwidth from a plurality of video bitrates based on the target bandwidth; and
sending a video acquisition request carrying the target video bitrate to the server.

16. A storage medium storing at least one instruction therein, wherein the at least one instruction, when executed by a processor of a terminal, causes the terminal to perform:

acquiring at least two first bandwidths of any group of pictures, wherein the first bandwidth is an average download rate acquired every target time interval in response to the group of pictures being downloaded; determining a third bandwidth of the group of pictures based on at least one first bandwidth that is not less than a second bandwidth of the group of pictures in the at least two first bandwidths, wherein the second bandwidth is an average download rate acquired in response to the group of pictures being downloaded; and determining a target bandwidth of a terminal based on third bandwidths of at least two groups of pictures.

17. The storage medium according to claim 16, wherein the processor is configured to execute the at least one instruction to perform:

acquiring at least one first bandwidth not less than the second bandwidth from the at least two first bandwidths; and

acquiring an average value of the at least one first bandwidth, and determining the average value as the third bandwidth of the group of pictures.

18. The storage medium according to claim 16, wherein the processor is configured to execute the at least one instruction to perform:
   determining a weighted average value of the third bandwidths of the at least two groups of pictures, and determining the weighted average value as the target bandwidth of the terminal.

19. The storage medium according to claim 16, wherein the processor is configured to execute the at least one instruction to perform:
   determining, during reception of a video stream from a server, at least two first bandwidths corresponding to the group of pictures and a second bandwidth corresponding to the group of pictures in response to one group of pictures being received, wherein the video stream comprises a plurality of groups of pictures.

20. The storage medium according to claim 16, wherein the processor is configured to execute the at least one instruction to perform:

   selecting a target video bitrate matching with the target bandwidth from a plurality of video bitrates based on the target bandwidth; and
   sending a video acquisition request carrying the target video bitrate to the server.

**FIG. 1**

Acquiring, by the terminal, at least two first bandwidths of any group of pictures, wherein the first bandwidth is an average download rate acquired every target time interval in response to the group of pictures being downloaded — S201

Determining, by the terminal, a third bandwidth of the group of pictures based on at least one first bandwidth that is not less than a second bandwidth of the group of pictures in the at least two first bandwidths, wherein the second bandwidth is an average download rate acquired in response to the group of pictures being downloaded — S202

Determining a target bandwidth of a terminal based on third bandwidths of at least two groups of pictures by the terminal — S203

**FIG. 2**

Establishing association relationships among a group of pictures, first bandwidths, and a second bandwidth by a terminal in response to receiving a video stream sent by a server, wherein the first bandwidth is an average download rate acquired every target time interval in response to the group of pictures being downloaded, and the second bandwidth is an average download rate acquired in response to the group of pictures being downloaded

S301

Acquiring at least two first bandwidths of any group of pictures by the terminal

S302

Determining, by the terminal, a third bandwidth of the group of pictures by the terminal based on at least one first bandwidth that is not less than the second bandwidth of the group of pictures in the at least two first bandwidths

S303

Determining a target bandwidth of the terminal by the terminal based on third bandwidths of at least two groups of pictures

S304

Selecting, by the terminal, a target video bitrate matching with the target bandwidth from a plurality of video bitrates based on the target bandwidth, and sending, by the terminal, a video acquisition request carrying the target video bitrate to the server

S305

**FIG. 3**

Apparatus for determining a bandwidth

Third determining unit — 404

Acquiring unit — 401

First determining unit — 402

Second determining unit — 403

Bitrate selecting unit — 405

Request sending unit — 406

**FIG. 4**

500

501

Processor

502

Memory

503

Peripheral device interface

Radio-frequency circuit
504

Display screen
505

Camera assembly
506

Audio circuit
507

Positioning assembly
508

Power source
509

| Acceleration sensor 55 | Gyro sensor 512 | Pressure sensor 513 |
| Fingerprint sensor 514 | Optical sensor 515 | Proximity sensor 516 |

Sensor 510

**FIG. 5**

## INTERNATIONAL SEARCH REPORT

| International application No. |
|---|
| **PCT/CN2020/127448** |

**A.    CLASSIFICATION OF SUBJECT MATTER**

H04L 29/06(2006.01)i

According to International Patent Classification (IPC) or to both national classification and IPC

**B.    FIELDS SEARCHED**

Minimum documentation searched (classification system followed by classification symbols)

H04L; H04N

Documentation searched other than minimum documentation to the extent that such documents are included in the fields searched

Electronic data base consulted during the international search (name of data base and, where practicable, search terms used)

WPI, EPODOC, CNPAT, CNKI: 带宽 改变 调整 自适应 减小 减少 增加 增大 下载 平均 速度 间隔 画面组 达佳互联 帧 码 率 bandwidth picture group GOP download smart speed MPEG I B P frame switch change increase decrease average

**C.    DOCUMENTS CONSIDERED TO BE RELEVANT**

| Category* | Citation of document, with indication, where appropriate, of the relevant passages | Relevant to claim No. |
|---|---|---|
| PX | CN 111698262 A (BEIJING DAJIA INTERCONNECTION INFORMATION TECHNOLOGY CO., LTD.) 22 September 2020 (2020-09-22) description, paragraphs [0035]-[0127], and claims 1-10 | 1-20 |
| A | CN 107071529 A (MIGU VIDEO TECHNOLOGY CO., LTD.) 18 August 2017 (2017-08-18) description, paragraphs [0057]-[0115], and figures 1-4 | 1-20 |
| A | CN 110430453 A (MIGU VIDEO TECHNOLOGY CO., LTD. et al.) 08 November 2019 (2019-11-08) entire document | 1-20 |
| A | CN 110213131 A (TENCENT TECHNOLOGY SHENZHEN CO., LTD.) 06 September 2019 (2019-09-06) entire document | 1-20 |
| A | CN 105744371 A (TCL DIGITAL TECHNOLOGY (SHENZHEN) CO., LTD.) 06 July 2016 (2016-07-06) entire document | 1-20 |
| A | WO 2014134811 A1 (HUAWEI TECHNOLOGIES CO., LTD.) 12 September 2014 (2014-09-12) entire document | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 March 2021** | **22 March 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/127448**

| Patent document cited in search report | | | Publication date (day/month/year) | Patent family member(s) | | | Publication date (day/month/year) |
|---|---|---|---|---|---|---|---|
| CN | 111698262 | A | 22 September 2020 | None | | | |
| CN | 107071529 | A | 18 August 2017 | None | | | |
| CN | 110430453 | A | 08 November 2019 | None | | | |
| CN | 110213131 | A | 06 September 2019 | None | | | |
| CN | 105744371 | A | 06 July 2016 | WO | 2016090665 | A1 | 16 June 2016 |
| WO | 2014134811 | A1 | 12 September 2014 | CN | 104170315 | A | 26 November 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010588541